# EUROPÄISCHE PATENTSCHRIFT

(11) **EP 1 305 664 B1**
(45) Veröffentlichungstag und Bekanntmachung des Hinweises auf die Patenterteilung: **26.04.2006**
(21) Anmeldenummer: 01971824.6
(22) Anmeldetag: 31.07.2001
(51) Int. Cl.: G02B 21/02, G02B 21/16

(54) **OBJEKTIV UND MIKROSKOP**
LENS AND MICROSCOPE
OBJECTIF ET MICROSCOPE

(30) Priorität: 04.08.2000 DE 10039338
(43) Veröffentlichungstag der Anmeldung: 02.05.2003
(73) Patentinhaber: Leica Microsystems AG, 9435 Heerbrugg (CH)
(72) Erfinder: OZYGUS, Bernd, 10717 Berlin (DE)
(74) Vertreter: Reichert, Werner Franz
(86) Internationale Anmeldenummer: PCT/EP2001/008838
(87) Internationale Veröffentlichungsnummer: WO 2002/012946

(56) Entgegenhaltungen:
- WO-A-99/13370
- DE-C- 569 984
- DE-U- 9 408 066
- GB-A- 2 251 701

## Beschreibung

Die Erfindung betrifft eine Laser bearbeitungsanlage nach Anspruch 1.

Mikromaterialbearbeitung mit Festkörperlasersystemen ist eine bereits gut eingeführte Technik, die aufgrund ihrer physikalischen Vorteile immer breitere Anwendungen findet. Das Anwendungsfeld reicht hier von vielfältigen Bearbeitungen im Metallbereich (Schweißen, Bohren, Schneiden, Markieren) bis hin zur Medizin und Biologie. Viele spezielle Bearbeitungsaufgaben lassen sich nur mit Lasern durchführen. Wichtig für das Bearbeitungsergebnis ist neben dem kleinen Spotdurchmesser des Laserstrahls auf dem Werkstück bzw. der Probe eine gute visuelle Kontrolle der Bearbeitung. Eine Möglichkeit, dies zu erreichen, ist die Benutzung eines Stereomikroskops, in dessen Strahlengang der Laser eingekoppelt wird. Bei den zur Zeit benutzten Aufbauten geschieht die Einkopplung des Laserstrahls in den Strahlengang des Mikroskops über einen feststehenden dichroitischen Spiegel, der gleichzeitig von dem Beobachtungs- und dem Laserstrahlengang benutzt wird. Die Fokussierung des Lasers und die Beobachtung geschieht mit dem gleichen Objektiv. Um einen kleineren Spotdurchmesser der Laserstrahls auf dem Werkstück bzw. der Probe zu ermöglichen, wird der Laserstrahl mit einem Teleskop geeignet aufgeweitet. Die Beobachtung des Bearbeitungsvorganges geschieht über einen Vergrößerungswechsler oder eine Zoomoptik mittels der Mikroskopokulare oder einer CCD Kamera.

Für viele speziellere Materialien ist eine Laserbearbeitung nur mit ultravioletter Strahlung möglich. Die höhere Energie der Laserphotonen ermöglicht ein direktes Aufbrechen von Molekülbindungen und macht eine Wechselwirkung über thermische Prozesse überflüssig. Der Wärmeeinflußbereich wird kleiner und damit reduziert sich der Bearbeitungsspot des Lasers. Außerdem sind aufgrund der kleineren Wellenlänge deutlich kleinere Fokusdurchmesser des Laserstrahls möglich. Ein Problem bei der Anwendung ultravioletter Strahlung ist allerdings die geringe Zahl der verwendbaren optischen Materialien. Die üblichen Glassorten sind für Wellenlängen unterhalb von 400 nm nicht mehr ausreichend transparent. Häufig werden hier Optiken aus Quarzglas eingesetzt. Um ultraviolette Strahlung in einem Stereomikroskop der bisher bekannten Bauart einzusetzen, müsste das Objektiv für die Laserwellenlänge ausreichend transparent sein und gleichzeitig sehr gute Abbildungseigenschaften für den sichtbaren Spektralbereich haben. Solche Objektive sind extrem aufwendig und teuer.

Aus DE 569 984 ist ein Mikroskop mit einem Trockenobjektiv, das von einer Ringlinse als Kondensor umgeben ist, bekannt.

Aus WO 99/13370 ist ein Mikroskop, insbesondere ein Fluoreszenzmikroskop und ein Stereo-Fluoreszenzmikroskop mit einem Beleuchtungsstrahlengang parallel zu einem Beobachtungsstrahlengang geführten Beleuchtungsstrahlengang bekannt. Der Beleuchtungsstrahlengang ist durch einen Vergrösserungswechsler lichtstärken-optimiert.

Der Erfindung liegt die Aufgabe zugrunde, auf der Basis der bekannten Mikroskope eine kostengünstige, flexible und präzise Werkstückbearbeitung insbesondere mit UV-Lasern, und eine Werkstückbeobachtung zu ermöglichen.

Diese Aufgabe wird durch ein Mikroskop gelöst, das dadurch gekennzeichnet ist, dass das Mikroskop Teil einer Laserbearbeitungsanlage mit einem Laser, der einen Laserstrahl zur Bearbeitung eines Werkstücks emittiert, ist.

Die Erfindung hat den Vorteil, dass auf konstruktiv einfache und kostengünstige Weise eine Werkstückbeobachtung und eine Werkstückbearbeitung, insbesondere mit ultravioletter Strahlung, ermöglicht ist. Außerdem ist eine einfache Umrüstung bereits entwickelter, nur zur Werkstückbeobachtung konzipierter Objektive zur gleichzeitigen Verwendbarkeit eines ultravioletten Bearbeitungslasers möglich.

In einer bevorzugen Ausgestaltung befindet sich die UV-Optik für den Laserstrahl im vorher entfernten Zentralbereich der Beobachtungsoptik. Ausgenutzt wird hier die Tatsache, dass der Beobachtungsstrahlengang und der Laserstrahlengang innerhalb des Objektivs räumlich getrennt sind. Hiermit ist es möglich, die äußere Optik für die Beobachtung und die innere Optik für die Bearbeitung getrennt zu optimieren. Die äußere Optik ist vorzugsweise für sichtbares Licht optimiert. Die innere Optik weist eine andere, vorzugsweise kleinere, Brennweite auf, als die äußere Optik. Hierdurch werden kleine Fokusdurchmesser des bearbeitenden Laserstrahles erzielt.

Ganz besonders vorteilhaft ist eine Laserbearbeitungsanlage mit einem Stereomikroskop. Der Zentralbereich des nicht für den Betrieb in einer Laserbearbeitungsanlage konzipierten Objektivs ist herausgebohrt. Es bildet eine äußere Optik. In die entstandene Öffnung ist eine innere Optik eingelassen, die eine UV-Optik ist. Der Laserstrahl definiert einen Laserstrahlengang, in dem die innere Optik positioniert ist. Das von dem Werkstück ausgehendes Beobachtungslicht definiert einen Beobachtungsstrahlengang, in dem die äußere Optik positioniert ist

In einer bevorzugen Ausgestaltung sind zumindest Teile der äußeren Optik auch im Laserstrahlengang oder Teile inneren Optik auch im Beobachtungsstrahlengang positioniert.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine Laserbearbeitungsanlage gemäß dem Stand der Technik und
- Fig.2: eine erfindungsgemäße Laserbearbeitungsanlage.

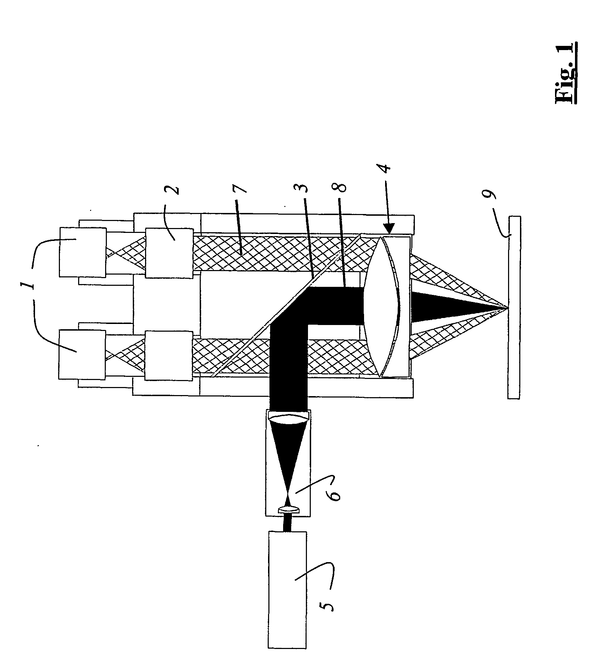

Fig. 1 zeigt ein optische Anordnung gemäß dem Stand der Technik. Die Einkopplung des Laserstrahls in den Strahlengang des Mikroskops geschieht über einen feststehenden dichroitischen Spiegel 3, der gleichzeitig von dem Beobachtungs- 7 und dem Laserstrahlen 8 benutzt wird. Die Fokussierung des Lasers 5 und die Beobachtung geschieht mit dem gleichen Objektiv 4. Um einen kleineren Spotdurchmesser der Laserstrahls 8 auf dem Werkstück 9 bzw. der Probe zu ermöglichen, wird der Laserstrahl mit einem Teleskop 6 geeignet aufgeweitet. Die Beobachtung des Bearbeitungsvorganges geschieht über einen Vergrößerungswechsler oder eine Zoomoptik 2 mittels der Mikroskopokulare 1 oder einer CCD Kamera.

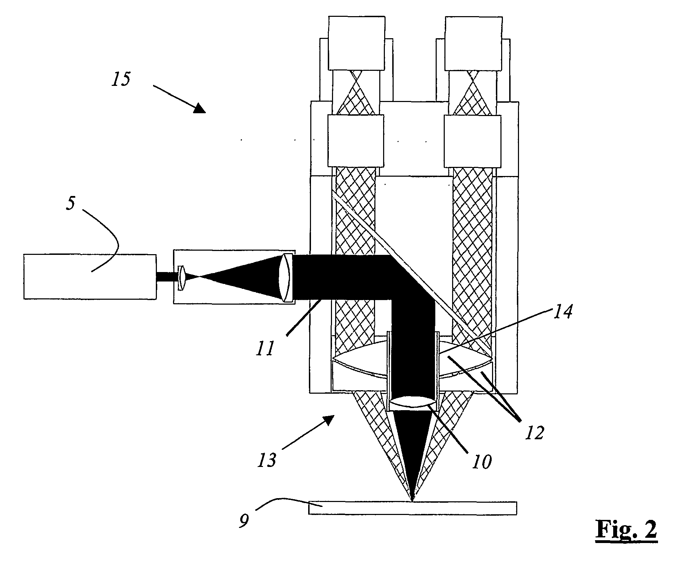

Fig. 2 zeigt eine erfindungsgemäße Laserbearbeitungsanlage mit einem Mikroskop 15, das als Stereomikroskop ausgeführt ist. Das Objektiv 13 weist eine innere Optik 10 und eine äußere Optik 12 auf. Die innere Optik 10 ist in einer Fassung 14 gehaltert und als UV-Optik ausgebildet. Sie befindet sich im vorher entfernten Zentralbereich der äußeren Optik 12, die in dieser Ausgestaltung die Beobachtungsoptik bildet. Der Laserstrahl 11, der vom Laser 5 emittiert ist, wird durch die innere Optik 10 fokussiert. Ausgenutzt wird hier die Tatsache, dass der Beobachtungsstrahlengang und der Laserstrahlengang innerhalb des Objektivs räumlich getrennt sind. Hiermit ist es möglich, die äußere Optik für die Beobachtung und die innere Optik für die Bearbeitung getrennt zu optimieren. In der gezeigten Laserbearbeitungsanlage ergibt sich bei Benutzung eines erfindungsgemäßen Objektivs außerdem der Vorteil, dass für den Laserstrahlengang kürzere Brennweiten benutzt werden können, wodurch kleinere Fokusdurchmesser möglich sind.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Mikroskopokulare
- 2: Zoomoptik
- 3: dichroitischer Spiegel
- 4: Objektiv
- 5: Laser
- 6: Teleskop
- 7: Beobachtungsstrahlen
- 8: Laserstrahl
- 9: Werkstück
- 10: innere Optik
- 11: Laserstrahl
- 12: äußere Optik
- 13: Objektiv
- 14: Fassung
- 15: Mikroskop

## Patentansprüche

1. Laserbearbeitungsanlage mit einem Mikroskop (15), das ein Objektiv (4, 13) aufweist, und mit einem Laser (5), der einen Laserstrahl (8, 11) zur Bearbeitung eines Werkstücks (9) emittiert, **dadurch gekennzeichnet, daß** das Objektiv (4, 13) eine für sichtbares Licht optimierte äußere Optik (12) mit einer zentralen Öffnung aufweist, in der eine innere Optik (10), die eine UV-Optik ist, positioniert ist.

2. Laserbearbeitungsanlage nach Anspruch 1, **dadurch gekennzeichnet, dass** das Mikroskop (15) ein Stereomikroskop ist.

3. Laserbearbeitungsanlage nach Anspruch 1, **dadurch gekennzeichnet, dass** innere Optik (10) eine andere Brennweite aufweist, als die äußere Optik (12).

4. Laserbearbeitungsanlage nach Anspruch 1, **dadurch gekennzeichnet, dass** der Laserstrahl (8, 11) einen Laserstrahlengang definiert, in dem die innere Optik (10) positioniert ist.

5. Laserbearbeitungsanlage Anspruch 1, **dadurch gekennzeichnet, dass** von dem Werkstück ausgehendes Beobachtungslicht einen Beobachtungsstrahlengang definiert in dem die äußere Optik (12) positioniert ist.

6. Laserbearbeitungsanlage nach Anspruch 5, **dadurch gekennzeichnet, dass** zumindest Teile der äußeren Optik (12) im Laserstrahlengang positioniert sind.

7. Laserbearbeitungsanlage nach Anspruch 6, **dadurch gekennzeichnet, dass** zumindest Teile der inneren Optik (10) im Beobachtungsstrahlengang positioniert sind.

## Claims

1. Laser machining system comprising a microscope (15) which has an objective (4, 13), and comprising a laser (5) which emits a laser beam (8, 11) for machining a workpiece (9), **characterized in that** the objective (4, 13) has an external optics (12), optimized for visible light, with a central opening in which an internal optics (10), which is a UV optics, is positioned.

2. Laser machining system as claimed in Claim 1, **characterized in that** the microscope (15) is a stereo microscope.

3. Laser machining system according to Claim 1, **characterized in that** the internal optics (10) has a different focal length to the external optics (12).

4. Laser machining system according to Claim 1, **characterized in that** the laser beam (8, 11) defines a laser beam path in which the internal optics (10) is positioned.

5. Laser machining system according to Claim 1, **characterized in that** observation light emanating from the workpiece defines an observation beam path in which the external optics (12) is positioned.

6. Laser machining system according to Claim 5, **characterized in that** at least parts of the external optics (12) are positioned in the laser beam path.

7. Laser machining system according to Claim 6, **characterized in that** at least parts of the internal optics (10) are positioned in the observation beam path.

## Revendications

1. Équipement d'usinage au laser comprenant un microscope (15) qui présente un objectif (4, 13) et comprenant un laser (5) qui émet un rayon laser (8, 11) pour usiner une pièce (9), **caractérisé en ce que** l'objectif (4, 13) présente une optique extérieure (12) optimisée pour la lumière visible munie d'une ouverture centrale dans laquelle est positionnée une optique intérieure (10) qui est une optique UV.

2. Équipement d'usinage au laser selon la revendication 1, **caractérisé en ce que** le microscope (15) est un stéréomicroscope.

3. Équipement d'usinage au laser selon la revendication 1, **caractérisé en ce que** l'optique intérieure (10) présente une autre distance focale que l'optique extérieure (12).

4. Équipement d'usinage au laser selon la revendication 1, **caractérisé en ce que** le rayon laser (8, 11) définit un trajet de rayon laser dans lequel est positionnée l'optique intérieure (10).

5. Équipement d'usinage au laser selon la revendication 1, **caractérisé en ce que** la lumière d'observation sortant de la pièce définit un trajet de rayon d'observation dans lequel est positionnée l'optique extérieure (12).

6. Équipement d'usinage au laser selon la revendication 5, **caractérisé en ce qu'**au moins des parties de l'optique extérieure (12) sont positionnées dans le trajet de rayon laser.

7. Équipement d'usinage au laser selon la revendication 6, **caractérisé en ce qu'**au moins des parties de l'optique intérieure (10) sont positionnées dans le trajet de rayon d'observation.
